Europäisches Patentamt

**European Patent Office**

**Office européen des brevets**

(11) Numéro de publication: **0 043 334**

**A1**

(12) **DEMANDE DE BREVET EUROPEEN**

(21) Numéro de dépôt: **81420087.9**

(22) Date de dépôt: **04.06.81**

(51) Int. Cl.³: **F 16 D 67/02**
**F 16 D 15/00**

(30) Priorité: **26.06.80 FR 8014585**

(43) Date de publication de la demande:
**06.01.82 Bulletin 82/1**

(84) Etats contractants désignés:
**DE GB IT**

(71) Demandeur: **Société dite: ASA S.A. (société anonyme)**
**76, boulevard du 11 Novembre**
**F-69100 Villeurbanne(FR)**

(72) Inventeur: **Ratte, Jean-Claude**

**F-42120 Parigny(FR)**

(74) Mandataire: **Laurent, Michel et al,**
**Bureaux Chalin A1 BP 32 20 rue Louis Chirpaz**
**F-69130 Lyon-Ecully(FR)**

(54) Dispositif pour l'embrayage, le débrayage et le freinage d'organes entraînés en rotation.

(57) Dispositif permettant d'assurer un embrayage ou un freinage progessifs, ainsi que la fonction de limiteur de couples d'organes entraînés en rotation.

caractérise par le fait que dans l'intervalle compris entre le palier fixe (3) et l'élément moteur (1) est disposé un ensemble (5) déplaçable par coulissement sur l'arbre (2), cet ensemble ayant la forme d'un manchon (6) qui présente à ses deux extrémités des portées annulaires (7), (8) ayant un diamètre $D$ supérieur au diamètre $d$ de l'arbre (2), chaque portée étant apte à venir coiffer, dans chacune des positions extrêmes de l'élément déplaçable (5) des ensembles (11-18) et (12-19) radialement déformables, comprenant une pluralité de billes (13), (14) maintenues annulairement autour de l'arbre (2), ces billes étant aptes à venir s'encastrer dans des empreintes (15), (16) prévues à la périphérie dudit arbre (2), le maintien des billes étant assuré par deux cages, l'une (11) solidaire de l'élément moteur (1) l'autre (12) étant solidaire du palier fixe (3) de guidage de l'arbre (2).

Le dispositif est utilisable, plus particulièrement dans le domaine textile.

./...

FIG. 2

# DISPOSITIF POUR L'EMBRAYAGE, LE DEBRAYAGE ET LE FREINAGE D'ORGANES ENTRAINES EN ROTATION.

La présente invention a trait à un dispositif perfectionné permettant l'embrayage, le débrayage et le freinage d'organes entraînés en rotation.

Elle a trait plus particulièrement à un dispositif utilisable dans le domaine de l'industrie textile notamment pour les installations servant au dévidage d'enroulements de fils et qui comportent des ensembles dévideurs désignés sous le nom de "tavelle".

Si dans la suite de la description, l'invention sera décrite plus particulièrement pour une telle application, il est évident que cela n'est pas limitatif et qu'elle pourrait être éventuellement utilisée dans d'autres domaines par exemple pour servir à l'entraînement de broches de renvidage et en général dans tous les cas où il est souhaité de pouvoir embrayer et débrayer un arbre avec un organe moteur, monté libre en rotation sur ledit arbre et entraîné constamment en rotation.

Lors du dévidage d'un enroulement de fil, l'un des principaux problèmes qui se pose est celui de l'accouplement de l'arbre d'entraînement en rotation dudit enroulement avec la poulie motrice montée sur cet arbre.

De nombreuses solutions faisant appel notamment à des systèmes à cônes ont été proposées et sont actuellement couramment utilisées.

Cependant, ces solutions ne permettent pas d'assurer à la fois un embrayage ou un freinage progressif, un entraînement positif après embrayage ainsi que le rôle de limiteur de couples, ce dernier point s'avérant particulièrement intéressant lorsque se produit un blocage accidentel.

Or, on a trouvé, et c'est ce qui fait l'objet de la présente invention, un dispositif de conception simple, donc économique à réaliser et à entretenir, qui permet d'atteindre l'ensemble de ces objectifs. Le dispositif selon l'invention permet non seulement d'avoir un entraînement positif et une sécurité qu'il n'est pas possible d'obtenir, tant en cours de fonctionnement normal que lors de l'embrayage, avec un système conventionnel comportant un doigt d'engagement associé à des cônes d'embrayage. Par ailleurs, le dispositif selon l'invention du fait qu'il permet de remplir également la fonction de limiteur de couples offre une grande sécurité par exemple lors d'un blocage accidentel de l'organe entraîné.

D'une manière générale, l'invention concerne donc un dispositif perfectionné permettant d'assurer de manière progressive l'embrayage avec un organe moteur (tel qu'un disque d'entraînement) et le freinage d'un arbre destiné à entraîner en rotation un support de fil, notamment pour assurer le dévidage du fil à partir dudit support, l'organe moteur étant constitué par une poulie tournant librement sur ledit arbre, ce dernier étant guidé dans un palier fixe. Le dispositif d'embrayage selon l'invention se caractérise par le fait que dans l'intervalle compris entre le palier fixe et l'élément moteur est disposé un ensemble déplaçable par coulissement sur l'arbre, cet ensemble ayant sensiblement la forme d'un manchon présentant à ses deux extrémités une partie annulaire ayant un diamètre supérieur au diamètre de l'arbre, chaque portée étant apte à venir coiffer, dans chacune des positions extrêmes de l'élément déplaçable, un ensemble radialement déformable, comprenant une pluralité de billes maintenues annulairement autour de l'arbre, normalement sans contact avec ce dernier, aptes à venir s'encastrer dans des empreintes prévues à la périphérie dudit arbre, le maintien des billes étant assuré par deux cages, l'une solidaire de l'élément moteur, l'autre solidaire du palier fixe de guidage de l'arbre.

L'élément déplaçable par coulissement sur l'arbre, et qui dans la suite de la description sera désigné par l'expression "manchon", est avantageusement associé à un système à ressorts assurant normalement son maintien autour de l'ensemble radialement déformable solidarisé avec le disque moteur. Dans ce mode de réalisation, le débrayage est obtenu par tous moyens mécaniques, telle qu'une poignée, permettant de déplacer longitudinalement le manchon sur l'arbre.

Par ailleurs, chaque portée réalisée à chaque extrémité du manchon est avantageusement revêtue sur sa face interne, en regard avec l'arbre, d'un matériau élastique présentant une bonne résistance à l'abrasion telle qu'une couche à base d'un matériau à base de polyuréthane.

L'invention et les avantages qu'elle apporte seront cependant mieux compris grâce à l'exemple de réalisation donné ci-après à titre indicatif mais non limitatif et qui est illustré par les schémas annexés dans lesquels :

- la figure 1 illustre en perspective, partiellement éclaté, un dispositif réalisé conformément à l'invention,

- la figure 2 est une coupe longitudinale schématique d'un tel dispositif.

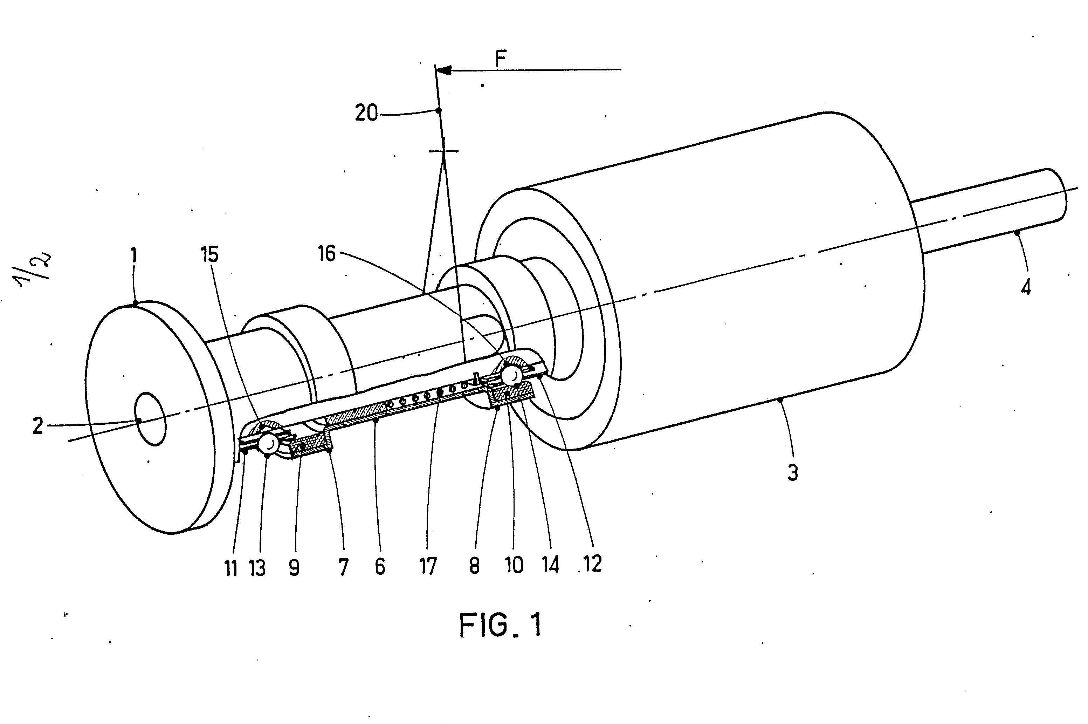

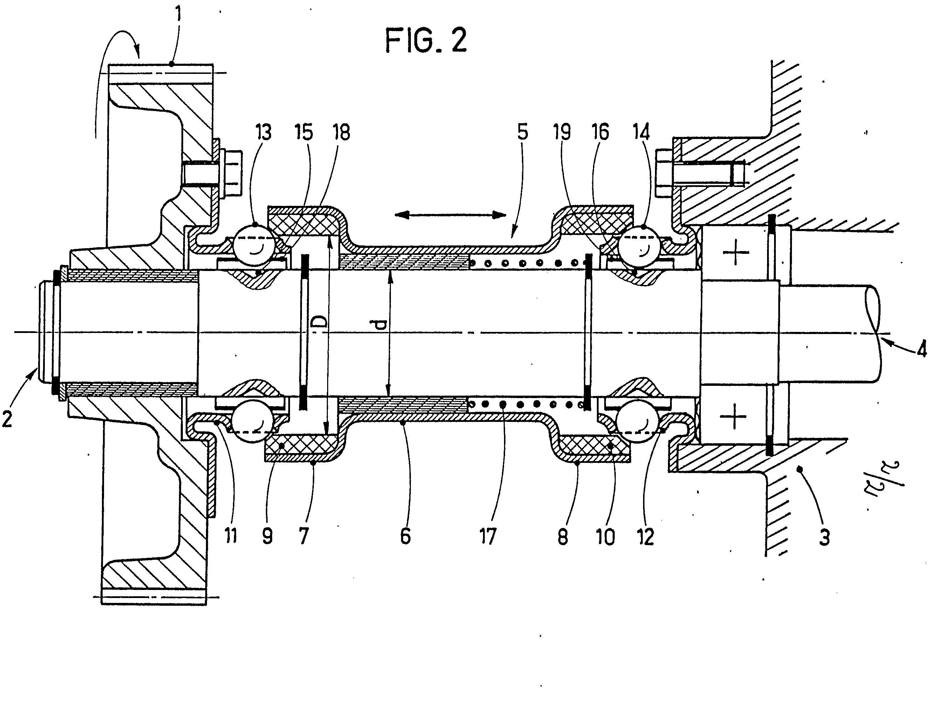

Dans la figure 1, l'ensemble est représenté en position freinée, l'arbre n'étant pas entraîné par l'élément moteur et, dans la figure 2, l'ensemble coulissant est représenté dans sa position intermédiaire entre la position d'embrayage et la position de freinage.

Si l'on se reporte aux figures annexées, le dispositif selon l'invention permettant d'assurer un embrayage ou un freinage progressif ainsi que la fonction de limiteur de couple d'organes entraînés en rotation tel qu'un ensemble d'enroulements de fils est constitué essentiellement d'un disque 1 monté libre en rotation autour d'un arbre 2 et entraîné en permanence par tous moyens moteurs telle qu'une courroie non représentée dans les schémas annexés. Cet arbre 2 est monté dans un palier fixe 3, solidaire du bâti de la machine duquel il sort en 4 en vue d'être utilisé notamment pour entraîner des enroulements de fils à dévider.

Conformément à l'invention, dans l'intervalle compris entre le palier fixe 3 et l'élément moteur constitué par le disque 1 est disposé un ensemble 5 déplaçable par coulissement sur l'arbre 2, cet ensemble ayant la forme d'un

# 

manchon 6 qui présente à ses deux extrémités des portées annulaires 7, 8 ayant un diamètre $D$ supérieur au diamètre $d$ de l'arbre 2.

Chaque portée 7, 8 est recouverte intérieurement par une couche 9, 10 d'un matériau élastique, par exemple à base de polyuréthane. L'élément 5 est déplaçable entre deux positions extrêmes le long de l'arbre 2, l'une selon laquelle il est proche de l'élément moteur 1 de manière à réaliser l'embrayage l'autre, selon laquelle il est proche du palier 3 de manière à assurer le freinage. Eventuellement, il peut être maintenu dans une position intermédiaire tel que cela est représenté à la figure 2.

Dans chacune des positions extrêmes, l'élément 5 vient coiffer des ensembles 11, 12 radialement déformables constitués de cages solidaires, l'une 11 du disque d'entraînement 1 et, l'autre 12 du palier fixe 3. Chacune de ces cages 11, 12 maintient une pluralité de billes 13, 14 annulairement autour de l'arbre 2. Le maintien des billes est obtenu, ainsi que cela est représenté à la figure 2, par l'intermédiaire d'éléments 18, 19 également déformables radialement de telle sorte que lesdites billes se trouvent légèrement écartées de l'arbre 2. Dans la suite de la description, les ensembles 11, 13, 18 et 12, 14, 19 seront désignés par l'expression "cages à billes".

Des séries d'empreintes 15, 16 sont prévues à la périphérie de l'arbre 2 dans les zones situées directement en regard des billes 13, 14. De plus, un ressort de rappel assure, dans le mode de réalisation illustré par les schémas annexés, le maintien de l'ensemble coulissant 5 en position embrayée c'est-à-dire dans la position selon laquelle la portée annulaire 7 coiffe la cage à billes 11, 13, 18 de sorte que les billes 13 de cette cage viennent s'encastrer et soient maintenues dans les empreintes 15 prévues à la périphérie de l'arbre 2. De cette manière, l'arbre 2 est maintenu normalement en position embrayée avec le disque moteur 1.

Le déplacement de cet ensemble coulissant 5 est obtenu, par exemple au moyen d'une fourche 20 représentée uniquement à la figure 1, cette fourche pouvant être manoeuvrée soit manuellement, soit de préférence par l'intermédiaire d'un système à vérin non représenté. Le fonctionnement d'un tel dispositif est le suivant. Lorsque l'on désire embrayer l'arbre 2 avec le disque d'entraînement 1, on supprime toute action sur le levier de commande 20 de l'ensemble coulissant 5 et grâce à l'action du ressort 17, cet élément 5 vient coiffer la cage à billes 11, 13, 18 solidaire du disque d'entraînement 1. Lors de ce déplacement, les billes 13 viennent s'encastrer dans les empreintes 15 et l'accouplement de l'arbre 2 avec le disque 1 est réalisé. Lorsque l'on désire débrayer l'arbre 2, on agit sur le levier 20 de telle sorte que l'ensemble coulissant 5 soit déplacé et que sa portée 8 vienne coiffer la seconde cage à billes 12, 14, 19 solidaire du palier fixe 3.

Les billes 14 de cette cage viennent alors s'encastrer dans les empreintes 16, ce qui assure un freinage progressif de l'arbre 2. Il est également possible ainsi que cela est représenté à la figure 2 de maintenir l'ensemble 5 dans une position intermédiaire, position dans laquelle il est possible de faire tourner librement l'arbre 2.

Par rapport aux dispositifs d'embrayage et de freinage antérieurs, un tel dispositif présente de nombreux avantages par le fait qu'il permet d'assurer aussi bien un embrayage qu'un freinage de l'arbre de manière progressive. Par ailleurs, il est possible, en choisissant de manière appropriée le diamètre et la dureté du matériau de recouvrement 9, 10 des portées annulaires 7, 8 d'utiliser un tel ensemble comme limiteur de couples.

Bien entendu, l'invention n'est pas limitée au mode de réalisation donné précédemment mais en couvre toutes les variantes réalisées dans le même esprit.

Si un tel dispositif convient particulièrement bien pour l'embrayage ou le freinage d'arbres disposés horizontalement, il pourrait éventuellement être adapté à l'embrayage et au freinage de broches verticales. De même, si dans l'exemple de réalisation illustré, l'élément coulissant est maintenu normalement en position embrayée grâce à l'action d'un ressort, cela n'est pas indispensable et l'on pourrait,par exemple, prévoir le maintien par tout autre moyen équivalent.

REVENDICATIONS

1/ Dispositif permettant d'assurer un embrayage ou un freinage progressifs, ainsi que la fonction de limiteur de couples, d'organes entraînés en rotation, notamment pour assurer le dévidage d'enroulements de fils, constitué essentiellement d'un disque (1) monté libre en rotation autour d'un arbre (2) entraîné en permanence par tous moyens moteurs appropriés, l'arbre (2) étant monté dans un palier fixe (3) solidaire du bâti de la machine, caractérisé par le fait que dans l'intervalle compris entre le palier fixe (3) et l'élément moteur (1) est disposé un ensemble (5) déplaçable par coulissement sur l'arbre (2), cet ensemble ayant la forme d'un manchon (6) qui présente à ses deux extrémités des portées annulaires (7), (8) recouvertes intérieureemnt par une couche (9), (10) d'un matériau élastique présentant une bonne résistance à l'abrasion, polyuréthane par exemple, ledit manchon (6) ainsi recouvert ayant un diamètre $D$ supérieur au diamètre $d$ de l'arbre (2), chaque portée étant apte à venir coiffer, dans chacune des positions extrêmes de l'élément déplaçable (5), des ensembles (11-18) et (12-19) radialement déformables, comprenant une pluralité de billes (13), (14) maintenues annulairement autour de l'arbre (2), ces billes étant aptes à venir s'encastrer dans des empreintes (15), (16) prévues à la périphérie dudit arbre (2), le maintien des billes étant assuré par deux cages, l'une (11) solidaire de l'élément moteur (1), l'autre (12) étant solidaire du palier fixe (3) de guidage de l'arbre (2).

2/ Dispositif selon la revendication 1, caractérisé par le fait que les cages (11), (12) et les éléments (18), (19) sont constitués par deux feuillards métalliques enserrant les billes (13), (14) et assurant une certaine élasticité radiale auxdites billes par rapport à l'arbre (2).

3/ Dispositif selon l'une des revendications 1 et 2, caractérisé par le fait que l'ensemble coulissant (5) est maintenu normalement en position embrayée par l'intermédiaire d'un ressort (17).

FIG. 1

FIG. 2

0043334

2/2

# 0043334

Numéro de la demande

**Office européen des brevets**

## RAPPORT DE RECHERCHE EUROPEENNE

EP 81 42 0087

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | F 16 D 67/02 15/00 |
| | US - A - 2 498 399 (DODGE) <br><br> * En entier * <br><br> --- | 1-3 | |
| | US - A - 2 757 768 (LANDERER) <br><br> * En entier * <br><br> --- | 1 | |
| | FR - A - 754 883 (BAILLEUL) <br><br> * En entier * <br><br> --- | 1 | |
| A | DE - C - 217 864 (WIRTZ) | | **DOMAINES TECHNIQUES RECHERCHES (Int. Cl.³)** |
| A | GB - A - 1704 AD/1909 (WIRTZ) <br><br> -------- | | F 16 D 67/00 15/00 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 28.09.1981 | BALDWIN |

OEB Form 1503.1 06.78